# EUROPÄISCHE PATENTSCHRIFT

(11) **EP 1 563 724 B1**
(45) Veröffentlichungstag und Bekanntmachung des Hinweises auf die Patenterteilung: **04.06.2008**
(21) Anmeldenummer: 05002633.5
(22) Anmeldetag: 09.02.2005
(51) Int. Cl.: A01D 69/00, A01F 29/14

(54) **Landwirtschaftliche Arbeitsmaschine**
Agricultural machine
Machine agricole

(30) Priorität: 17.02.2004 DE 102004007837
(43) Veröffentlichungstag der Anmeldung: 17.08.2005
(73) Patentinhaber: CLAAS Selbstfahrende Erntemaschinen GmbH, 33428 Harsewinkel (DE)
(72) Erfinder: Deppe, Markus, 33790 Halle (DE)

(56) Entgegenhaltungen:
- EP-A- 0 805 059
- EP-A- 1 338 191
- WO-A-99/48353
- US-A1- 2003 162 619

## Beschreibung

Die Erfindung betrifft eine Vorrichtung zum Speichern und Abgeben von Energie in einer landwirtschaftlichen Erntemaschine nach dem Oberbegriff des Anspruchs 1.

Landwirtschaftliche Arbeitsmaschinen unterliegen während der Erntefahrt erheblichen Belastungen. So werden sämtliche Arbeitsaggregate wie beispielsweise Schneidwerk, Häckseltrommel oder die Konditionierwalzen an einem selbstfahrenden Feldhäcksler durch das zu bearbeitende Erntegut stark beansprucht. Um eine einwandfreie Bearbeitung des Ernteguts zu gewährleisten wird die Drehzahl der Arbeitsaggregate konstant gehalten. Insbesondere bei landwirtschaftlichen Emtemaschinen unterliegen die Motordrehzahlen aber, aufgrund ungleichmäßiger Erntegutbestände, starken Schwankungen. So schwankt in Abhängigkeit von der den Arbeitsaggregaten zugeführten Erntegutmenge der Motorleistungsbedarf. Dies hat zur Folge, dass bei sehr dichten Erntegutbeständen der Motor sehr stark belastet wird und vom Fahrer eine Reduzierung der Fahrgeschwindigkeit vorgenommen werden muss, um eine Überlastung des Motors der Erntemaschine zu vermeiden. Problematisch ist hierbei, dass der Eingriff häufig nicht schnell genug vorgenommen werden kann sodass es zum Festsetzen der Arbeitsaggregate oder unsauberer Emtegutqualität kommt. Andererseits muss der Fahrer auch bei weniger dichtem Erntegutbestand korrigierend eingreifen und beispielsweise die Fahrgeschwindigkeit erhöhen, damit der Motor optimal ausgelastet wird.

Diesbezüglich offenbart die US-A-2003/0162619 eine Vorrichtung zum Übertragen von Antriebskraft von einer Antriebswelle auf eine Zapfwelle, die unabhängig von Drehzahlveränderungen des Verbrennungsmotors einen Zapfwellenbetrieb mit einer im Wesentlichen konstanten Drehzahl ermöglicht, wobei der Zapfwellenbetrieb mit einer Zapfwellendrehzahl erfolgt, der einen vorgebbaren Verhältniswert zur Fahrtgeschwindigkeit aufweist.

In der EP 0 805 059 ist ein elektromechanischer Hybridantrieb offenbart, mit dem Ziel, einen verbesserten Antriebsmechanismus für Zusatzeinrichtungen, wie beispielsweise eine Klimaanlage, eine Servolenkung oder einen Bremskraftverstärker von einem Fahrzeug in Verbindung mit einem Verbrennungsmotor und einem elektrischen Hybridlastschaltgetriebe zu schaffen.

Die EP 1 065 920 B1 offenbart eine Zuführvorrichtung mit wenigstens einer rotierend antreibbaren Fördervorrichtung in einem selbstfahrenden Feldhäcksler und einem mechanischen Getriebe, das als Planetengetriebe ausgebildet ist und als Elemente einen Planetenradträger, ein Sonnenrad und ein Ringrad aufweist, wobei je ein Element des Getriebes in Antriebsverbindung mit einem mechanischen Antrieb und der Fördervorrichtung steht.
Durch die Anordnung der verschiedenen Organe soll der Antrieb verbessert werden. Es soll ein hoher Wirkungsgrad aufgrund des mechanischen Getriebes und mittels der Überlagerung durch den Motor eine Drehzahländerung erreicht werden. Hierdurch soll die Hauptleistung durch das mechanische Getriebe verlaufen, wodurch der Motor eine nur geringe Leistung in das Getriebe einzuleiten braucht und daher klein ausgelegt werden kann.
Die in der EP 1 065 920 B1 offenbarte Erfindung hat jedoch lediglich eine Verbesserung des Antriebes zum Gegenstand. Der Energieverbrauch selbst bleibt insgesamt unverändert hoch und wird an keiner Stelle der Landmaschine dem tatsächlichen Bedarf angepasst. Eine Verbesserung des Energieverbrauchs wird durch die Elementeanordnung nicht erreicht. Die Energie wird vom Motor erzeugt und in das Getriebe geleitet, von wo aus die Energie den Arbeitsaggregaten der Landmaschine zugeführt und unmittelbar ungesetzt wird. Eine energetische Unterstützung durch zusätzliche Leistungsreserven ist nicht vorgesehen.

Es ist daher Aufgabe der vorliegenden Erfindung Energie aus einem Antriebssystem zu entnehmen und einem Energiespeicher zuzuführen und damit eine Leistungsreserve zu schaffen, welche die gespeicherte Energie dem Antriebssystem zusätzlich zur Verfügung stellt.

Diese Aufgabe wird gemäß den kennzeichnenden Merkmalen des Anspruch 1 gelöst.

Indem wenigstens einem Energieerzeuger zumindest ein elektrischer Antrieb zugeordnet ist, wobei der wenigstens eine elektrischer Antrieb mit einem Energiespeicher verbunden ist, Energie aus dem Antriebssystem entnimmt und dem Energiespeicher zuführt kann in Abhängigkeit von dem Energiebedarf des wenigstens einen Arbeitsaggregates durch zusätzliche Einspeisung von gespeicherter Energie in das Antriebssystem die Energieversorgung des wenigstens einen Arbeitsaggregates geregelt werden. Da die Einspeisung der Energie in das Antriebssystem insbesondere bei auftretenden Leistungsschwankungen, wie beispielsweise Drehzahlschwankungen an der Häckseltrommel eines selbstfahrenden Feldhäckslers, erfolgt, wird mit einem konstanten Leistungsniveau der Betrieb der landwirtschaftlichen Erntemaschine durchgeführt. Damit wird der permanent variierende Leistungsbedarf einer Erntemaschine durch die Zuführung von zusätzlicher Energie vergleichmäßigt. Durch die hierdurch erreichte Verminderung der Drehzahlschwankungen werden außerdem die bei unterschiedlichen Belastungen auftretenden Schwingungen reduziert.

Das Zu- oder Abschalten des elektrischen Antriebes erfolgt stets bei Leistungsbedarfschwankungen, so dass auch hierdurch ein Ausgleich der Drehzahlschwankungen herbeigeführt wird.

Dadurch, dass der zumindest eine elektrische Antrieb in Abhängigkeit von dem Energiebedarf des wenigstens einen anderen Energieerzeugers zu- oder abgeschaltet wird, wird die Drehzahl der durch den Energieerzeuger angetriebenen Arbeitsaggregate konstant gehalten. Hierdurch wird der Energieerzeuger, der als Verbrennungmotor ausgeführt sein kann, weniger stark belastet. Außerdem wird Kraftstoff gespart und der Fahrer entlastet, da bei konstanter Fahrgeschwindigkeit der Arbeitsbetrieb unverändert fortgesetzt werden kann.

Durch die Zuführung von Energie durch den elektrischen Antrieb in einen Energiespeicher, der als Batterie ausgeführt sein kann, wird eine zusätzliche Energiereserve geschaffen, die neben der durch den Verbrennungsmotor erzeugten Energie genutzt werden kann. Hierdurch kann das Antriebssystem mit zusätzlicher Energie versorgt und eine Entlastung, die insbesondere bei auftretenden Leistungsspitzen von erheblicher Bedeutung ist, des gesamten Antriebssystems herbeigeführt werden.

Indem die Regelung der energiebedarfsabhängigen Energiezuführung eingestellt werden kann, kann der Fahrer der landwirtschaftlichen Arbeitsmaschine den Schwellwert der Energiezuführung genau festlegen und damit eine Anpassung an die aktuellen Erntebedingungen vornehmen, um die Auslastung der Landmaschine zu optimieren.

Durch das einstellbare Zuschalten und Abschalten des wenigstens einen elektrischen Antriebes in Abhängigkeit von dem Energiebedarf des zumindest einen anderen Energieerzeugers und/oder Arbeitsaggregates, kann exakt gesteuert werden wann die Leistungsreserve in Anspruch genommen werden soll und wie viel Energie dem anderen Energieerzeuger und/oder Arbeitsaggregat bei Leistungsschwankungen zugeführt werden muss. Hierdurch lässt sich beispielsweise eine konstante Drehzahl der Arbeitsaggregate steuern. Zudem werden Drehzahlschwankungen durch das gezielte Speichern und Abgeben von Energie reduziert.

Das selbsttätige Zu- und Abschalten wenigstens eines elektrischen Antriebes führt zu einer Entlastung des Fahrers der landwirtschaftlichen Arbeitsmaschine. So kann die Erntefahrt durchgeführt werden, ohne dass der Fahrer eine Vielzahl von Leistungsparametern beachten muss, um die Landmaschine optimal auszulasten.

Indem von zumindest einem Arbeitsaggregat und/oder Energieerzeuger Energie entnommen und einem Energiespeicher zugeführt wird, wird eine zusätzliche Energiereserve geschaffen. Dadurch kann die gespeicherte Energie an beliebigen Stellen innerhalb der Landmaschine eingesetzt werden, ohne dass z.B. die erzeugte Energie des Verbrennungsmotors eingesetzt werden müsste.
Weitere vorteilhafte Ausgestaltungen sind Gegenstand weiterer Unteransprüche und werden nachfolgend anhand von Zeichnungen näher erläutert.

Es zeigen:
- Figur 1:: die schematische Darstellung eines selbstfahrenden Feldhäckslers in Seitenansicht mit erfindungsgemäßer Vorrichtung
- Figur 2:: ein Flussdiagramm der erfindungsgemäßen Vorrichtung

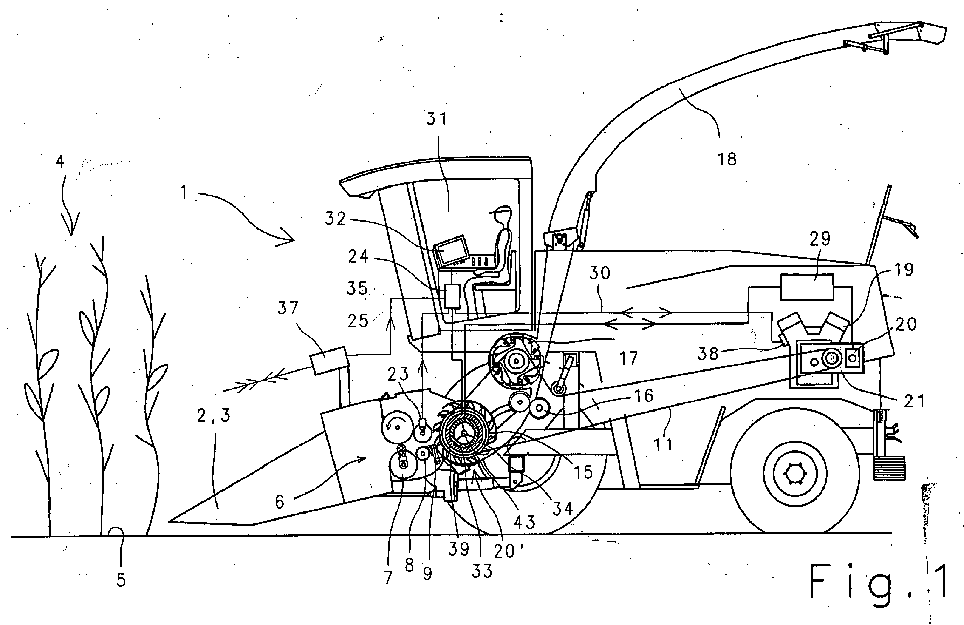

Figur 1 zeigt eine schematische Darstellung eines selbstfahrenden Feldhäckslers 1 in Seitenansicht.
Das frontseitig am Feldhäcksler 1 montierte Vorsatzgerät 2, welches vorliegend als Maisgebiss 3 ausgebildet ist, ist in Abhängigkeit von der jeweiligen Erntegutart austauschbar und dient dazu das Erntegut 4 vom Feldboden 5 aufzunehmen, abzuschneiden und den nachgeordneten Arbeitsaggregaten 7, 8, 15, 16, 17 zuzuführen. Dem Vorsatzgerät kann ein Sensor 37 zur berührungslosen Erkennung des Erntegutbestandes zugeordnet sein. Der Sensor 37 erkennt wie viel Erntegut 4 eingezogen wird und ändert in Abhängigkeit hiervon in allgemein bekannter Weise die Fahrtgeschwindigkeit des Feldhäckslers 1 oder die Drehzahl der Arbeitsaggregate 7, 8, 15, 16, 17 oder die Drehzahl des Motors 19.

Das mehrere Meter breite Vorsatzgerät 2 führt das aufgenommene Erntegut 4 in einen Einzugsbereich 6 zusammen. Über diesen Einzugsbereich 6 wird das Erntegut 4 von einem ersten Vorpresswalzenpaar 7 angenommen und verdichtet. Dem ersten Vorpresswalzenpaar 7 ist ein zweites Vorpresswalzenpaar 8 nachgeordnet, welches das vorverdichtete Erntegut 4 weiter zu einem Erntegutstrang verdichtet und den Erntegutstrang über eine Gegenschneide 9 den Messern 10 der Häckseltrommel 15 zuführt. An der unmittelbar vor der Häckseltrommel 15 angeordneten Gegenschneide 9 wird das Erntegut 4 von den Messern 10 zerschnitten und an ein der Häckseltrommel 15 nachgeordnetes Konditionierwalzenpaar 16 übergeben, bevor das Erntegut 4 von dem Nachbeschleuniger 17 beschleunigt und über einen sich anschließenden Auswurfkrümmer 18 aus dem Feldhäcksler 1 gefördert wird.
Sämtliche Arbeitsaggregate 2, 7, 8, 15, 16, 17 werden von dem als Energieerzeuger arbeitenden Motor 19 des Feldhäckslers 1 angetrieben. So wird z.B. die Häckseltrommel 15 über eine Riemenscheibe 39 durch den Hauptantriebsriemen 11 des Motors 19 angetrieben.
Ein dem Motor 19 zugeordnetes Summengetriebe 21 führt den Motor 19 und einen elektrischen Antrieb 20 zusammen. Der elektrischen Antrieb 20 ist mit einem Energiespeicher, der zum Beispiel als Batterie 29 ausgeführt sein kann, verbunden.
Der elektrische Antrieb 20 entnimmt Energie aus dem Antriebssystem und führt diese entnommene Energie der Batterie 29 zu. Hierdurch wird die Batterie 29 aufgeladen und eine zusätzliche Energiereserve hergestellt und dem Maschinenantrieb zur Verfügung gestellt. Aus dieser Energiereserve kann im Bedarfsfall die gespeicherte Energie in das Antriebssystem eingespeist werden, um problematische Leistungsspitzen zu überbrücken.
Der elektrische Antrieb 20 kann dem Antriebssystem Energie entnehmen, indem er leistungsreduzierend in das Antriebssystem eingreift. Durch das Herabsenken der Leistung des Antriebes kann der elektrische Antrieb 20 wie ein Generator Energie dem Antrieb entnehmen und damit als Bremse arbeiten und diese entnommene Energie der Batterie 29 zuführen. Soll also eine Herabsetzung der Antriebsleistung des Gesamtantriebes der Landmaschine erfolgen, so kann dies über den elektrischen Antrieb 20 geregelt werden und die hierbei erzeugte Energie als zusätzliche Leistungsreserve der Batterie 29 zugeführt und dort gespeichert werden.

Auf diese gespeicherte Energie kann mittels des elektrischen Antriebes 20 nach Bedarf zurückgegriffen und über den elektrischen Antrieb 20 in das gemeinsame Summengetriebe 21 des elektrischen Antriebs 20 und des Motors 19 geführt werden. Im Gegensatz zu dem Motor 19 leitet der elektrische Antrieb 20 jedoch nur im Bedarfsfall die Energie in das Summengetriebe 21. Dieser Bedarfsfall kann unterschiedlich definiert werden. So ist vorstellbar, das sich der elektrische Antrieb 20 in Abhängigkeit von dem Energieverbrauch wenigstens eines Arbeitsaggregates 2, 4, 7, 8, 15, 16, 17 selbsttätig zuschaltet. Auf diese Weise regelt der elektrische Antrieb 20 in Abhängigkeit von dem aktuellen Energiebedarf des jeweiligen Arbeitsaggregates 2, 4, 7, 8, 15, 16, 17 die Energieversorgung des wenigstens einen Arbeitsaggregates 2, 4, 7, 8, 15, 16, 17. Demgemäss kann beispielsweise die Drehzahl der Häckseltrommel 15 auf eine bestimmte Solldrehzahl festgelegt werden. Diese Solldrehzahl dient als Schwellwert für die Regelung der Energieversorgung aus dem Speicher 29. Sobald diese festgelegte Solldrehzahl unterschritten wird, z.B. durch das sich drehzahlsenkend auswirkende Einfahren in dichten Erntegutbestand und die dadurch bedingte starke Belastung der Häckseltrommel 15, schaltet sich der elektrische Antrieb 20 zu und speist zusätzliche Energie aus der Batterie 29 in das Summengetriebe 21. Diese zusätzliche Energie wird mit der Motorenergie an das Verteilgetriebe 22 und letztlich der Häckseltrommel 15 weitergegeben. Der Energiespeicher 29 dient damit der Vergleichmäßigung von Drehzahlschwankungen. Es wird also ein Drehzahlausgleich durchgeführt, um eine weitestgehend konstante Drehzahl zu erhalten. Auf diese Weise werden problematische Leistungsspitzen erfolgreich überbrückt, ohne dass es aufgrund von Drehzahlschwankungen, insbesondere von Drehzahlsenkungen, zu einer Verschlechterung der Häckselqualität kommt. Die Drehzahl selbst wird durch einen allgemein bekannten Drehzahlsensor 23 an dem jeweiligen Arbeitsaggregat 2, 7, 8, 15, 16, 17 ermittelt und an eine Auswerteelektronik 24 übergeben, die die Ansteuerung des elektrischen Antriebs 20 vornimmt. Anstelle von Drehzahlsensoren 23 können auch andere allgemein bekannte Messmittel, wie beispielsweise Momentaufnehmer, verwendet werden.
Erfindungsgemäß sollte der elektrische Antrieb 20 die Energie aus dem Speicher 29 im gleichen Verhältnis entnehmen und in das Summengetriebe 21 leiten und dem entsprechenden Arbeitsaggregat 2, 7, 8, 15, 16, 17 zuführen, wie die festgelegte Solldrehzahl des jeweiligen Arbeitsaggregates 2, 7, 8, 15, 16, 17 unterschritten wird. Durch die konstante Drehzahl wird außerdem ein geräuscharmer Gleichlauf der Landmaschine 1 und deren Arbeitsaggregate 2, 7, 8, 15, 16, 17 erreicht.

Um eine optimale Steuerung des elektrischen Antriebs 20 zu erreichen, kann dem Motor 19 eine Motorelektronik 38 zugeordnet werden, die mittels eines BUS - Systems 30 mit einer Auswerteelektronik 24 verbunden ist, die die empfangenen Motorsignale verarbeitet und auf einen an die Fahrerkabine 31 der landwirtschaftlichen Arbeitsmaschine 1 integrierten Bedienterminal 32 zur Anzeige bringt. Die Auswerteelektronik 24 ist außerdem mit dem Sensor 37 und wenigstens einem Arbeitsaggregat 15 verbunden und nimmt die dort generierten Signale auf und verarbeitet diese. Infolgedessen findet ein permanenter Informationsaustausch über die wesentlichen Leistungsparameter innerhalb der landwirtschaftlichen Arbeitsmaschine statt, die von dem Fahrer der Landmaschine 1 am Bedienterminal 32 kontrolliert und gesteuert werden können. In Abhängigkeit von den empfangenen Signalen können diese Signale gleichfalls für das drehzahl- oder energiebedarfsabhängige Speichern oder Abgeben von Energie verwendet werden.

In einem besonderen Ausführungsbeispiel ist der elektrische Antrieb 20' der Häckseltrommel 15 zugeordnet. Der elektrische Antrieb 20' wird unter anderem von einem Rotor 33 und diesen ringförmig umgebenden Stator 34 gebildet. Der Rotor 33 des elektrischen Antriebs 20' ist drehfest auf der Häckseltrommelwelle 43 angeordnet. Soll die Drehzahl der Häckseltrommel 15 gesenkt werden, bremst der elektrische Antrieb 20' die umlaufende Häckseltrommel 15 teilweise oder bringt die Häckseltrommel 15 ganz zum Stillstand. Die dabei umzuwandelnde kinetische Energie der Häckseltrommel 15 wird von dem elektrischen Antrieb 20' nach dem Generatorprinzip in elektrische Spannung zur Aufladung des als Batterie 29 ausgeführten elektrischen Speichers transformiert.
Da nach Beendigung der Feldarbeit der Antrieb des Feldhäckslers 1 abgeschaltet wird, die Häckseltrommel 15 jedoch aufgrund ihrer Eigenrotation weiter umläuft, kann der elektrische Antrieb 20' auch als eine Art Sicherheitsschaltung für Arbeitsaggregate verwendet werden, indem der elektrische Antrieb 20' automatisch nach der Abschaltung des Feldhäckslerantriebes selbsttätig und bremsend in die Rotation der Häckseltrommel 15 eingreift, die Häckseltrommel 15 zum Stillstand bringt und die hieraus entnommene Energie der Batterie 29 zuführt.

Die Bremsfunktion und die damit verbundene Energiezuführung in die Batterie 29 kann nicht nur in Bezug auf die rotierende Häckseltrommel 15, sondern auf sämtliche sich bewegende Organe innerhalb des Feldhäckslers 1 zur Anwendung gelangen. Ferner bereitet es keine Probleme die erfindungsgemäße Umwandlung der Bremsenergie und die damit in Verbindung stehende Energiezuführung in einen Speicher auf andere Maschinen, wie beispielsweise einem Mähdrescher und dessen Arbeitsorgane, wie Dreschtrommel etc., zu übertragen.

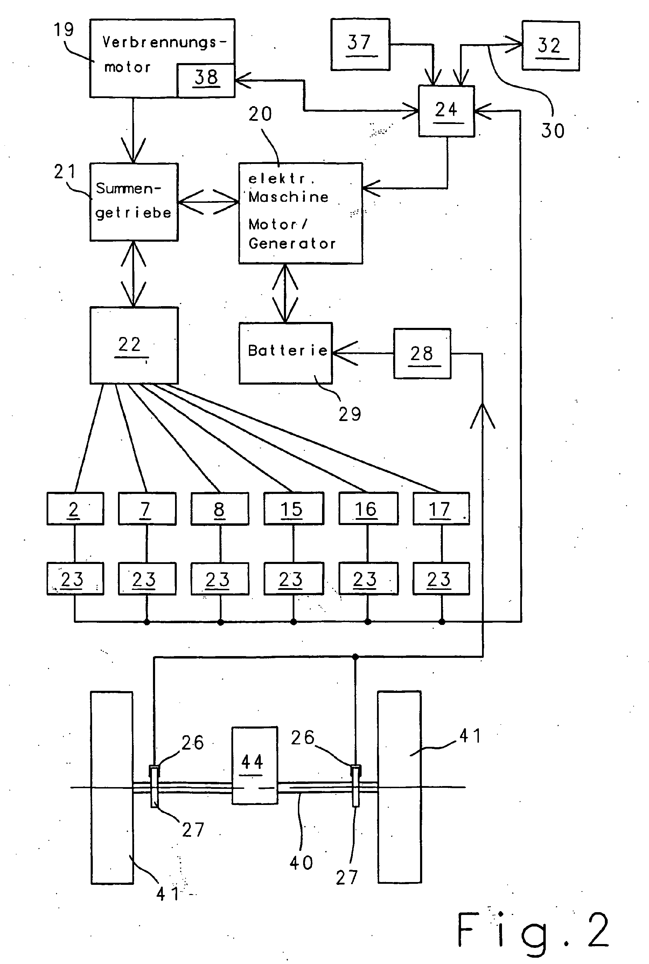

In Figur 2 ist das Wirkprinzip der zugrundeliegenden Erfindung vereinfacht dargestellt sowie ein Antriebssystem, bestehend aus einem Getriebe 44, auf der Antriebswelle 40 angeordneten Bremsbacken 26 und Bremsscheiben 27 und Reifen 41. In dem in Figur 2 abgebildeten Flussdiagramm, ist dem Motor 19, der als Diesel- oder Ottomotor ausgeführt werden kann, über ein Summengetriebe 21 der elektrische Antrieb 20 zugeordnet.
Der Motor 19 erzeugt während des Betriebes des Feldhäckslers 1 dauerhaft Energie und leitet diese in ein Summengetriebe 21. Das Summengetriebe 21 leitet die Energie weiter an ein Verteilgetriebe 22 welches die Energie den unterschiedlichen Arbeitsaggregaten 2, 7, 8, 15, 16, 17 zuführt. Erfindungsgemäß führt das Summengetriebe 21 den Motor 19 und den elektrischen Antrieb 20 zusammen. Die Zuführung der Energie durch den elektrischen Antrieb 20 in die Batterie 29 erfolgt in der zuvor bereits beschriebenen Weise. Übersteigt der Leistungsbedarf eines oder mehrerer Arbeitsaggregate 2, 7, 8, 15, 16, die von dem Motor 19 bereitgestellte Leistung, wird der elektrische Antrieb 20 zugeschaltet und führt als Energieversorger die in der Batterie 29 gespeicherte Energiereserve dem Summengetriebe 21 zu. Der gesamte Vorgang kann selbsttätig zur Entlastung des Fahrers und zur optimalen Auslastung der Landmaschine erfolgen.

Alternativ hierzu wäre eine manuelle Zuschaltung oder Abschaltung des elektrischen Antriebs 20 durch den Fahrer der landwirtschaftlichen Arbeitsmaschine 1 denkbar. Der Fahrer des Feldhäckslers 1 könnte über das in der Fahrerkabine 31 angeordnete Bedienterminal 32 die Drehzahlenverhältnisse an den unterschiedlichen Arbeitsaggregaten 7, 8, 15, 16, 17 ablesen und im Bedarfsfall manuell den elektrischen Antrieb 20 zuschalten, um somit einen Drehzahlanstieg bzw. -ausgleich herbeizuführen.

Im Rahmen der Erfindung wäre weiterhin vorstellbar, Energie an anderen Arbeitsaggregaten, wie z.B. dem Fahrantrieb 44, 40, 26, 27, zu entnehmen. So könnte die an den Bremsbacken 26 beim Bremsen erzeugte Energie an der Bremsscheibe 27 des Feldhäckslers 1 entnommen werden und in einem Spannungswandler 28 transformiert werden, bevor die so gewonnene Energie einer Batterie 29, zugeführt wird.

Um Bauraum zu sparen wäre es weiterhin ausführbar den elektrischen Antrieb 20 und eine dazugehörige Batterie 29 unmittelbar dem jeweiligen Arbeitsaggregat 2, 7, 8, 15, 16, 17 zuzuordnen. Diese Anordnung ermöglicht einen kürzeren und schnelleren Energiefluss zwischen dem elektrischen Antrieb 20 und dem jeweiligen Arbeitsaggregat 2, 7, 8, 15, 16, 17 und damit einen geringeren Energieverlust.
Hiernach könnte ein vom Antriebssystem und damit auch vom Motor 19 getrennter elektrischer Antrieb 20 den genauen Anforderungen des ihm zugeordneten Verbrauchers angepasst werden. So ist es denkbar mehrere elektrische Antriebe 20 in einer landwirtschaftliche Arbeitsmaschine anzuordnen. Im vorliegenden Ausführungsbeispiel in Form eines Feldhäckslers 1 kann der elektrische Antrieb 20 beispielsweise auch für ein kurzzeitiges Reversieren des Einzugsaggregates 7 verwendet werden, wobei die hierfür benötigte Energie aus der Häckseltrommel 15 entnommen werden kann.
Die aufgrund der teilweise starken Leistungsschwankungen sehr groß dimensionierten Antriebsriemen können daher insgesamt schwächer ausgelegt werden, was sich neben der Bauraumersparnis kostenreduzierend auswirkt.

Auch könnte der elektrische Antrieb 20 die in der Batterie 29 gespeicherte Energie zum geräuscharmen und schnellen Start der Landmaschine 1 und der dazugehörigen Arbeitsaggregate 2, 7, 8, 15, 16, 17 nutzen, wodurch der Motor 19 erheblich entlastet wird.

Ferner kann der elektrische Antrieb 20 als elektrischer Allradantrieb verwendet werden, wobei der elektrische Antrieb 20 bei der Reduzierung der Geschwindigkeit Energie zum Speichern an die Batterie 29 gibt und bei der Zuführung von Energie aus der Batterie ein Antrieb der landwirtschaftlichen Arbeitsmaschine erfolgt. Die zusätzliche für den Achsantrieb zur Verfügung gestellte Energie ist insbesondere bei schwierigem Gelände, wie z.B. bei Hangfahrten sehr nützlich.

Schließlich liegt es im Rahmen des Könnens eines Fachmanns die hier am Beispiel eines Feldhäckslers 1 beschriebene Erfindung an beliebigen landwirtschaftlichen Arbeitsmaschinen einzusetzen, wie beispielsweise an einem selbstfahrenden Mähdrescher und dessen Arbeitsaggregaten wie Dreschtrommel, Strohhäcksler etc., um die beschriebenen Effekte zu erzielen.

### Bezugszeichenliste:

- 1: Selbstfahrender Feldhäcksler
- 2: Vorsatzgerät
- 3: Maisgebiss
- 4: Erntegut
- 5: Feldboden
- 6: Einzugsbereich
- 7: Vorpresswalzenpaar
- 8: Vorpresswalzenpaar
- 9: Gegenschneide
- 10: Messer
- 11: Hauptantriebsriemen
- 15: Häckseltrommel
- 16: Konditionierwalzenpaar
- 17: Nachbeschleuniger
- 18: Auswurfkrümmer
- 19: Motor
- 20: Elektrischer Antrieb
- 21: Summengetriebe
- 22: Verteilgetriebe
- 23: Drehzahlsensor
- 24: Auswerteelektronik
- 26: Bremsbacke
- 27: Bremsscheibe
- 28: Spannungswandler
- 29: Batterie
- 30: Bussystem
- 31: Kabine
- 32: Bedienterminal
- 33: Rotor
- 34: Stator
- 36: Steuerung
- 37: Sensor
- 38: Motorsteuerung
- 39: Riemenscheibe
- 40: Antriebsachse
- 41: Reifen
- 43: Häckseltrommelwelle
- 44: Getriebe

## Patentansprüche

1. Landwirtschaftliche Erntemaschine mit mindestens einem Energieerzeuger welcher zumindest ein Arbeitsaggregat an einer landwirtschaftlichen Erntemaschine antreibt und mindestens einem Energiespeicher,
**dadurch gekennzeichnet, dass**
dem wenigstens einen Energieerzeuger (19) zumindest ein elektrischer Antrieb (20) zugeordnet ist, wobei der zumindest eine elektrische Antrieb (20) mit dem Energiespeicher (29) verbunden ist, Energie aus dem Antriebssystem entnimmt und dem Energiespeicher (29) zuführt und in Abhängigkeit von dem Energiebedarf des wenigstens einen Arbeitsaggregates (2,4,7,8,15,16,17) durch zusätzliche Einspeisung von gespeicherter Energie in das Antriebssystem die Energieversorgung des wenigstens einen Arbeitsaggregates (2, 4, 7, 8, 15, 16, 17) regelt.

2. Landwirtschaftliche Arbeitsmaschine gemäß Anspruch 1,
**dadurch gekennzeichnet, dass**
der zumindest eine elektrische Antrieb (20) in Abhängigkeit von dem Energiebedarf des wenigstens einen Arbeitsaggregates (2, 4, 7, 8, 15, 16, 17) zu- oder abschaltbar ist.

3. Landwirtschaftliche Arbeitsmaschine nach einen oder mehreren der vorangegangenen Ansprüche,
**dadurch gekennzeichnet, dass**
der zumindest eine elektrische Antrieb (20) in Abhängigkeit von dem Energiebedarf des wenigstens einen Energieerzeugers (19) zu- oder abgeschaltet wird.

4. Landwirtschaftliche Arbeitsmaschine nach einen oder mehreren der vorangegangenen Ansprüche,
**dadurch gekennzeichnet, dass**
der elektrische Antrieb (20) die Energie wenigstens einem Energiespeicher (29, 29) und/oder mindestens einem Arbeitsaggregat (2, 4, 7, 8, 15, 16, 17) zuführt.

5. Landwirtschaftliche Arbeitsmaschine nach einen oder mehreren der vorangegangenen Ansprüche,
**dadurch gekennzeichnet, dass**
wenigstens ein elektrischer Antrieb (20) zumindest einem Arbeitsaggregat (2, 4, 7, 8, 15, 16, 17) zugeordnet ist.

6. Landwirtschaftliche Arbeitsmaschine nach einen oder mehreren der vorangegangenen Ansprüche,
**dadurch gekennzeichnet, dass**
wenigstens einem Arbeitsaggregat (15) ein Drehzahlsensor (23) zugeordnet ist, der die ermittelten Drehzahlen einer Auswerteelektronik (24) übergibt, wobei die Auswerteelektronik (24) in Abhängigkeit von den übergebenen Drehzahlsignalen den elektrischen Antrieb (20) ansteuert.

7. Landwirtschaftliche Arbeitsmaschine nach einen oder mehreren der vorangegangenen Ansprüche,
**dadurch gekennzeichnet, dass**
der Energieerzeuger (19) ein Verbrennungsmotor und der Speicher (29, 29) eine Batterie ist.

8. Landwirtschaftliche Arbeitsmaschine nach einen oder mehreren der vorangegangenen Ansprüche,
**dadurch gekennzeichnet, dass**
die Regelung der Energieversorgung durch den wenigstens einen elektrischen Antrieb (20) in Abhängigkeit von dem Energiebedarf des zumindest einen Energieerzeugers (19) und/oder Arbeitsaggregates (2, 4, 7, 8, 15, 16, 17) einstellbar ist.

9. Landwirtschaftliche Arbeitsmaschine nach einen oder mehreren der vorangegangenen Ansprüche,
**dadurch gekennzeichnet, dass**
die Zuschaltung und Abschaltung des wenigstens einen elektrischen Antriebs (20) in Abhängigkeit von dem Energiebedarf des zumindest einen Energieerzeugers (19) und/oder Arbeitsaggregates (2, 4, 7, 8, 15, 16, 17) einstellbar ist.

10. Landwirtschaftliche Arbeitsmaschine nach einen oder mehreren der vorangegangenen Ansprüche,
**dadurch gekennzeichnet, dass**
die Zu- und Abschaltung des wenigstens einen elektrischen Antriebs (20) selbsttätig erfolgt.

11. Landwirtschaftliche Arbeitsmaschine nach einen oder mehreren der vorangegangenen Ansprüche,
**dadurch gekennzeichnet, dass**
der elektrische Antrieb (20) mit einer Batterie(29) und einem Summengetriebe (21) verbunden ist.

12. Landwirtschaftliche Arbeitsmaschine nach einen oder mehreren der vorangegangenen Ansprüche,
**dadurch gekennzeichnet, dass**
der Energieerzeuger (19) und der elektrische Antrieb (20) einem gemeinsames Summengetriebe (21) zugeordnet sind.

13. Landwirtschaftliche Arbeitsmaschine nach einen oder mehreren der vorangegangenen Ansprüche,
**dadurch gekennzeichnet, dass**
das gemeinsame Summengetriebe (21) wenigstens einem Verteilgetriebe (22) und das Verteilgetriebe (22) zumindest einem Arbeitsaggregat (2, 7, 8, 15, 16, 17) zugeordnet ist.

## Claims

1. An agricultural harvester comprising at least one energy producer which drives at least one working assembly on an agricultural harvester, and at least one energy storage means,
**characterised in that**
at least one electric drive (20) is associated with the at least one energy producer (19), wherein the at least one electric drive (20) is connected to the energy storage means (29), takes energy from the drive system and feeds it to the energy storage means (29) and regulates the energy supply of the at least one working assembly (2, 4, 7, 8, 15, 16, 17) in dependence on the energy requirement of the at least one working assembly (2, 4, 7, 8, 15, 16, 17) by an additional feed of stored energy into the drive system.

2. An agricultural working machine according to claim 1 **characterised in that** the at least one electric drive (20) can be switched on or off in dependence on the energy requirement of the at least one working assembly (2, 4, 7, 8, 15, 16, 17).

3. An agricultural working machine according to one or more of the preceding claims **characterised in that** the at least one electric drive (20) is switched on or off in dependence on the energy requirement of the at least one energy producer (19).

4. An agricultural working machine according to one or more of the preceding claims **characterised in that** the electric drive (20) feeds the energy to at least one energy storage means (29, 29) and/or at least one working assembly (2, 4, 7, 8, 15, 16, 17).

5. An agricultural working machine according to one or more of the preceding claims **characterised in that** at least one electric drive (20) is associated with at least one working assembly (2, 4, 7, 8, 15, 16, 17).

6. An agricultural working machine according to one or more of the preceding claims **characterised in that** associated with at least one working assembly (15) is a rotary speed sensor (23) which transmits the ascertained rotary speeds to an electronic evaluation means (24), wherein the electronic evaluation means (24) actuates the electric drive (20) in dependence on the transmitted rotary speed signals.

7. An agricultural working machine according to one or more of the preceding claims **characterised in that** the energy producer (19) is an internal combustion engine and the storage means (29, 29) is a battery.

8. An agricultural working machine according to one or more of the preceding claims **characterised in that** regulation of the energy supply by the at least one electric drive (20) is adjustable in dependence on the energy requirement of the at least one energy producer (19) and/or working assembly (2, 4, 7, 8, 15, 16, 17).

9. An agricultural working machine according to one or more of the preceding claims **characterised in that** switching-on and switching-off of the at least one electric drive (20) is adjustable in dependence on the energy requirement of the at least one energy producer (19) and/or working assembly (2, 4, 7, 8, 15, 16, 17).

10. An agricultural working machine according to one or more of the preceding claims **characterised in that** switching-on and switching-off of the at least one electric drive (20) is effected automatically.

11. An agricultural working machine according to one or more of the preceding claims **characterised in that** the electric drive (20) is connected to a battery (29) and a summation gear means (21).

12. An agricultural working machine according to one or more of the preceding claims **characterised in that** the energy producer (19) and the electric drive (20) are associated with a common summation gear means (21).

13. An agricultural working machine according to one or more of the preceding claims **characterised in that** the common summation gear means (21) is associated with at least one distribution gear means (22) and the distribution gear means (22) is associated with at least one working assembly (2, 4, 7, 8, 15, 16, 17).

## Revendications

1. Machine agricole de récolte qui comprend au moins un générateur d'énergie entraînant sur la machine au moins une unité de travail, et au moins un accumulateur d'énergie, **caractérisée en ce qu'**au générateur d'énergie (19) au nombre d'un au moins, est associé au moins un entraînement électrique (20) qui est relié à l'accumulateur d'énergie (29), qui prélève de l'énergie dans le système d'entraînement pour l'envoyer à l'accumulateur d'énergie (29) et qui en fonction du besoin d'énergie d'au moins une unité de travail (2, 4, 7, 8, 16, 17), par fourniture supplémentaire d'énergie accumulée, régule dans le système d'entraînement l'alimentation en énergie d'au moins une unité de travail (2, 4, 7, 8, 16, 17).

2. Machine agricole selon la revendication 1, **caractérisée en ce qu'**au moins un entraînement électrique (20) peut être mis en ou hors service en fonction du besoin d'énergie d'au moins une unité de travail (2, 4, 7, 8, 15, 16, 17).

3. Machine agricole selon la revendication 1 ou 2, **caractérisée en ce qu'**au moins un entraînement électrique (20) est mis en ou hors service en fonction du besoin d'énergie d'au moins un générateur d'énergie (19).

4. Machine agricole selon une ou plusieurs des revendications précédentes, **caractérisée en ce que** l'entraînement électrique (20) envoie l'énergie à au moins un accumulateur d'énergie (29, 29) et/ou à au moins une unité de travail (2, 4, 7, 8, 15, 16, 17).

5. Machine agricole selon une ou plusieurs des revendications précédentes, **caractérisée en ce qu'**au moins un entraînement électrique (20) est associé à au moins une unité de travail (2, 4, 7, 8, 15, 16, 17).

6. Machine agricole selon une ou plusieurs des revendications précédentes, **caractérisée en ce qu'**à au moins une unité de travail (15) est associé un capteur de vitesse de rotation (23) qui transmet les vitesses déterminées à une électronique d'évaluation (24), la commande de l'entraînement électrique (20) étant assurée par cette électronique (24) en fonction des signaux de vitesse de rotation transmis.

7. Machine agricole selon une ou plusieurs des revendications précédentes, **caractérisée en ce que** le générateur d'énergie (19) est un moteur à combustion interne et l'accumulateur (29, 29) une batterie.

8. Machine agricole selon une ou plusieurs des revendications précédentes, **caractérisée en ce que** la régulation de l'alimentation en énergie peut être assurée par l'entraînement électrique (20) au nombre d'un au moins, en fonction du besoin d'énergie d'au moins un générateur d'énergie (19) et/ou d'au moins une unité de travail (2, 4, 7, 8, 15, 16, 17).

9. Machine agricole selon une ou plusieurs des revendications précédentes, **caractérisée en ce que** la mise en ou hors service de l'entraînement électrique (20) au nombre d'un au moins peut être réglée en fonction du besoin d'énergie d'au moins un générateur d'énergie (19) et/ou d'au moins une unité de travail (2, 4, 7, 8, 15, 16, 17).

10. Machine agricole selon une ou plusieurs des revendications précédentes, **caractérisée en ce que** la mise en ou hors service de l'entraînement électrique (20) au nombre d'un au moins a lieu automatiquement.

11. Machine agricole selon une ou plusieurs des revendications précédentes, **caractérisée en ce que** l'entraînement électrique (20) est relié à une batterie (29) et à un engrenage d'addition (21).

12. Machine agricole selon une ou plusieurs des revendications précédentes, **caractérisée en ce que** le générateur d'énergie (19) et l'entraînement électrique (20) sont associés à un engrenage d'addition (21) commun.

13. Machine agricole selon une ou plusieurs des revendications précédentes, **caractérisée en ce que** l'engrenage d'addition (21) commun est associé à au moins un engrenage d'aiguillage (22) lui-même associé à au moins une unité de travail (2, 7, 8, 15, 16, 17).
